# EUROPÄISCHE PATENTSCHRIFT

(11) **EP 2 100 917 B1**
(45) Veröffentlichungstag und Bekanntmachung des Hinweises auf die Patenterteilung: **25.04.2012**
(21) Anmeldenummer: 08004691.5
(22) Anmeldetag: 13.03.2008
(51) Int. Cl.: C08L 9/00, C08L 63/00, C09D 5/00

(54) **Additivmischung für Epoxidharze**
Additive mixture for epoxy resin
Mélange additif pour résines époxy

(43) Veröffentlichungstag der Anmeldung: 16.09.2009
(73) Patentinhaber: Schill + Seilacher "Struktol" GmbH, 22113 Hamburg (DE)
(72) Erfinder: Just, Berthold, Dr., 22397 Hamburg (DE); Imeri, Seljam, 22117 Hamburg (DE)
(74) Vertreter: UEXKÜLL & STOLBERG

(56) Entgegenhaltungen:
- EP-A- 0 145 323
- EP-A- 1 411 093
- US-A- 5 362 799
- US-B1- 6 632 860

## Beschreibung

Die vorliegende Erfindung betrifft ein Verfahren zur Herstellung eines Expoxidharz-Masterbatches unter Verwendung einer Additivmischung. Das erfindungsgemäße Additiv basiert auf einer Mischung aus einem Homo- oder Copolymer auf Basis von 1,3-Dienen und ggf. polaren, ethylenisch ungesättigten Comonomeren, wobei das Homo- oder Copolymer an den Enden funktionalisiert ist, und Metallsalz. Bei Verwendung in Epoxidharzen verbessert die erfindungsgemäße Additivmischung die Schlagzähigkeit der Harze.

Epoxidharze, die unter anderem Verwendung als Klebstoffe, Schmelzklebstoffe, Beschichtungen (Coatings) und als Bestandteile von Verbundwerkstoffen (Composites) finden, sind in ausgehärtetem Zustand häufig hart und spröde und weisen gegenüber schlagender Beanspruchung häufig keine zufriedenstellenden Eigenschaften auf. Ein gängiges Verfahren zur Verbesserung der Schlagfestigkeit von Epoxidharzen besteht darin, spezielle Kautschukadditive als heterodisperse Phase in das Epoxidharz (Epoxidharzmatrix) einzulagern. Derartig modifizierte Epoxidharze werden auch als "Toughened" bezeichnet. Im Stand der Technik ist es bekannt, für diesen Zweck Butadien-Acrylnitril-Copolymere einzusetzen, die an den Endgruppen unter anderem mit Carbonsäuregruppen funktionalisiert sind.

Der vorliegenden Erfindung liegt die Aufgabe zu Grunde, einen Masterbatch für Epoxidharze bereitzustellen, der bei Verwendung in Epoxidharzsystemen eine bessere Schlagzähigkeit erzielt, als die im Stand der Technik bekannten Materialien auf Basis von Dien-Copolymeren, um zufriedenstellende bzw. verbesserte Schlagzähigkeit zu erzielen.

Diese Aufgabe wird durch ein Verfahren gemäß Anspruch 1 gelöst.

Weitere bevorzugte Gegenstände der vorliegenden Erfindung sind in den abhängigen Ansprüchen beschrieben.

Die erfindungsgemäße Dispersion führt bei Verwendung in einem Epoxidharz zu einer Verbesserung der Schlagzähigkeit. Zum Beispiel gelingt es mit der erfindungsgemäßen Dispersion die Schlagzähigkeit eines gehärteten Epoxidharzes im Test gemäß EN ISO 179 um bis zu 160 % zu erhöhen (Angabe bezogen auf einen Vergleichsharz). Dagegen führt ein herkömmlicher Acrylnitril-Butadien-Kautschuk gegenüber dem Vergleichsharz lediglich zu einer Erhöhung der Schlagzähigkeit von 35 bis 40 %.

Im Folgenden werden die Begriffe Schlagzähigkeit und Schlagfestigkeit synonym verwendet.

Bei dem Homo- bzw. Copolymerbestandteil der erfindungsgemäßen Additivmischung handelt es sich um ein Homo- oder Copolymer mit Einheiten, die abgeleitet sind von mindestens einem 1,3-Dien und ggf. mindestens einem polaren, ethylenisch ungesättigten Comonomeren und dessen Endgruppen reaktive funktionelle Gruppen aufweisen, wie beispielsweise Carboxyl-, Hydroxyl-, Epoxy-, Amid- oder Aminogruppen, insbesondere Carboxylgruppen.

Das Molekulargewicht dieser Copolymeren beträgt vorzugsweise 500 bis 5000, vorzugsweise 2000 bis 5000, insbesondere 3000 bis 4500 (Zahlenmittel). Das Copolymer ist im Allgemeinen flüssig bzw.

Die erfindungsgemäße Additivmischung wird in einem Anteil von 5 bis 60 Gew.-%, vorzugsweise 20 bis 40 Gew.-%, in das Epoxidharz eingearbeitet, insbesondere in ein Harz auf Basis von Bisphenol-A- oder Bisphenol-F-Diglycidylether. Die vorstehenden Gew.-%-Angaben beziehen sich dabei auf den Gehalt der aktiven, d. h. erfindungswesentlichen Bestandteile der Additivmischung in dem Epoxidharz.

Je nach vorgesehener Verwendung kann die Mischung bzw. das Addukt auf Basis der Mischung und des Epoxidharzes mit weiteren üblichen Zusätzen vermischt werden. So können z. B. Zusammensetzungen erzeugt werden, die zur Herabsetzung der Viskosität reaktive Verdünner wie Styroloxid, Butylglycidylether, 2,2,4-Trimethylpentylglycidylether, Phenylglydidylether, Kresylglycidylether oder Glycidylester von synthetischen, hochverzweigten, in der Hauptsache tertiären aliphatischen Monocarbonsäuren enthalten. Andererseits kann die erfindungsgemäße Mischung aber auch ohne jeglichen weiteren Zusätze hergestellt und verwendet werden. D. h. in solchen Fällen besteht die Mischung nur aus der Homo- oder Copolymerkomponente und der Metallsalzkomponente, wie jeweils vorstehend definiert.

Weitere übliche Zusätze in den Epoxidharzen sind ferner Weichmacher, Streck-, Füll- und Verstärkungsmittel, wie beispielsweise Steinkohlenteer, Bitumen, Textilfasern, Glasfasern, Asbestfasern, Borfasern und Kohlenstoff-Fasern, Farbstoffe wie Ruß, Flammschutzmittel, Thixotropiemittel, Verlaufmittel (die zum Teil auch als Formtrennmittel Anwendung finden) wie Silikone, Wachse und Stearate oder Haftvermittler, Antioxidantien und Lichtschutzmittel.

Ferner können für die weitere Verwendung als Klebstoff oder als Coating oder Verbundmaterial, bei der eine Aushärtung des Epoxidharzes notwendig ist, an sich bekannte Härter und gegebenenfalls Beschleuniger zugesetzt werden.

Geeignete Härter sind beispielsweise Polyamine mit mindestens zwei primären und/oder sekundären Aminogruppen, wie aliphatische durch Umsetzung von Bortrifluorid bzw. Bortrichlorid mit beispielsweise 1,3-Diketonen, Aminen oder Ethern erhalten werden.

Weitere geeignete Härter sind Amidine, wie beispielsweise Dicyandiamid oder 1-Cyan-3-(niedrigalkyl)-guanidine, wie z. B. die 3-Methyl-, 3,3-Dimethyl- oder 3,3-Diethylderivate.

Beispiele für Härtungsbeschleuniger sind tertiäre Amine, deren Salze oder quaternäre Ammoniumverbindungen, wie Benzyldimethylamin, 2,4,6-Tris-(dimethylaminomethyl)-phenol, 4-Aminopyridin oder Tetramethylammoniumchlorid; oder die Imidazole oder die substituierten Harnstoffe, wie oben erwähnt. Ferner kann DDS (= 4,4'-Diaminodiphenylsulfon) verwendet werden.

Die Additivmischung bzw. das Addukt aus Copolymer und Epoxidharz wird erfindungsgemäß in aus dem Stand der Technik an sich bekannte Epoxidharze eingearbeit werden, um Masterbatches zu bilden, die in der Regel Zwischenprodukte darstellen, die noch weiter verarbeitet werden. Die Masterbatches können zum Beispiel in andere Materialien eingearbeitet werden und sodann unter Zusatz von geeigneten Härtern, z. B. Aminen oder Anhydriden temperaturabhängig ausgehärtet werden. Dies führt dann zu Verbundwerkstoffen (Composites), Beschichtungen oder Klebstoffen.

Insbesondere führt die erfindungsgemäße Verwendung zu Schlagzähigkeiten, gemessen nach EN ISO 179, von größer als 50 kJ/m², z. B. 50 bis 100 kJ/m² oder 70 bis 90 kJ/m².

Beispiele für Epoxidharze, die erfindungsgemäß verwendet werden können, sind:
I) Polyglycidyl- und Poly-(β-methylglycidyl)-ester, die beispielsweise durch Umsetzung von einer Verbindung enthaltend mindestens zwei Carboxylgruppen im Molekül mit Epichlorhydrin, Glycerindichlorhydrin oder mit β-Methylepichlorhydrin in Gegenwart von Basen erhalten werden können.
   (1,2-epoxyethyl)-bicyclo[2.2.1]heptan, Dicyclopentadiendioxid, Cyclohexa-1,3-diendioxid, 3,4-Epoxy-6-methylcyclohexylmethyl-3', 4'-epoxy-6'-methylcyclohexancarboxylat oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind. Zu solchen Verbindungen zählen beispielsweise das N,N,O-Triglycidylderivat des 4-Aminophenols, der Glycidylether-glycidylester der Salicylsäure, N-Glycidyl-N'-(2-glycidyloxipropyl)-5,5-dimethylhydantoin oder 2-Glycidyloxy-1,3-bis-(5,5-dimethyl-1 -glycidylhydantoin-3-yl)-propan.

Bevorzugt sind Diglycidylether auf Bisphenol-Basis, insbesondere auf Basis von Bisphenol A und/oder Bisphenol F.

Der Gehalt der erfindungsgemäßen Additivmischung bzw. ihrer wesentlichen aktiven Bestandteile im Epoxidharz (Endprodukt) variiert je nach Anwendung und beträgt im Allgemeinen von 5 bis 20 Gew.-%, insbesondere 5 bis 15 Gew.-%, wie 5 bis 10 Gew.-%, bezogen auf das Gewicht der gesamten Zusammensetzung aus Additivmischung, Epoxidharz und gegebenfalls weiteren Zusätzen.

Wenn die erfindungsgemäße Additivmischung in einen Epoxidharz eingearbeitet wird, um einen Masterbatch zu bilden, dann beträgt ihr Gehalt bzw. der ihrer wesentlichen aktiven Bestandteile 5 bis 60, insbesondere 10 bis 50, vorzugsweise 20 bis 40, insbesondere etwa 30 Gew.-%, bezogen auf das Gewicht der gesamten Zusammensetzung aus Additivmischung, Epoxidharz und gegebenfalls weiteren Zusätzen.

### Beispiele

Die folgenden Beispiele veranschaulichen die Erfindung, insbesondere die Herstellung eines bevorzugten erfindungsgemäßen Copolymeren und seine Einbindung in ein Epoxidharz zur Herstellung zähflüssig, d. h. bei Temperaturen unterhalb von etwa 80°C fließfähig.

Beispiele für 1,3-Diene, von denen die Einheiten des Homopolymers bzw. zumindest ein Teil der Einheiten des Copolymers abgeleitet ist, sind Butadien, Isopren oder Chloropren. Butadien ist bevorzugt.

Für den Fall, dass ein Copolymer verwendet wird, sind Beispiele für polare ethylenisch ungesättigte Comonomere, von denen ein weiterer Teil der Einheiten des Copolymers abgeleitet ist, Acrylsäure, Methacrylsäure, niedere Alkylester dieser Säuren, Amide dieser Säuren, zweiwertige Carbonsäuren wie Fumarsäure, Maleinsäure und Itakonsäure (Methylenbernsteinsäure), niedere Alkylester, wie C₁- bis C₅-Alkylester dieser Säuren, Amide dieser Säuren, entsprechende Halbester dieser Säuren, Anhydride dieser Säuren, Vinylester wie beispielsweise Vinylacetat, Acrylnitril und Methacrylnitril. Besonders bevorzugt ist das polare, ethylenisch ungesättigte Comonomer ausgewählt aus Acrylnitril oder Methacrylnitril, insbesondere ist es Acrylnitril.

Neben den vorstehend genannten polaren, ethylenisch ungesättigten Comonomeren kann das Copolymer noch weitere unpolare, ethylenisch ungesättigte Comonomere enthalten. Beispiele dafür sind Ethylen, Propylen oder insbesondere Styrol oder substituierte Styrole wie Vinyltoluol.

Das Copolymer kann ein statistisches Copolymer, ein Blockcopolymer oder ein Pfropfcopolymer sein. Dabei kann der Anteil der verschiedenen Comonomere, von denen die Einheiten des Copolymers abgeleitet sind, in weiten Bereichen schwanken. Die erfindungsgemäßen Polymere erstrecken sich jedoch nicht auf die sogenannten Kern-/Schale-Polymersysteme, bei denen ein Kern aus einem weichen Polymer auf Basis von Dienen, ggf. copolymerisiert mit vernetzbaren Monomeren wie Acrylnitril, mit einer Schale (Hülle) aus einem vergleichsweise härteren Polymer auf Basis von Acrylat- oder Methacrylatmonomeren und ggf. weiteren Monomeren versehen wird, z. B. durch ein mehrstufiges Emulsionspolymerisationsverfahren, wobei das Schalenpolymer in der Regel durch Vernetzung weiter gehärtet ist. Sie liegen dann in Form kleiner Teilchen vor.

Beispiele für erfindungsgemäße Acrylnitril-Butadien-Copolymere sind die kommerziell von der Firma Emerald Performance Materials, Cuyahoga Falls, Ohio, USA, (vormals Noveon, Goodrich) erhältlichen Copolymere vom Typ Hycar^{®}, die mit Carboxyl- oder Aminogruppen endständig funktionalisiert sind. Bevorzugte Typen solcher Kautschuke enthalten als sich wiederholende Einheiten die Strukturelemente der folgenden Formeln Ia bis Id

-CH₂-CH=CH-CH₂- (Ia)

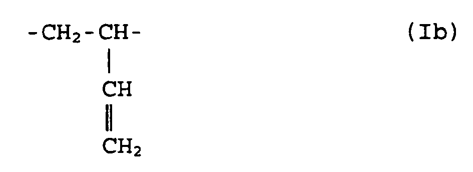

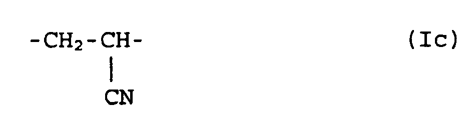

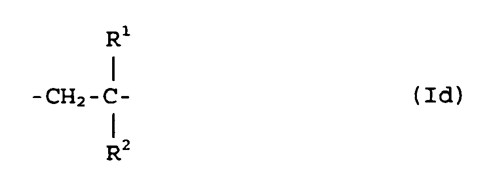

worin R¹ Wasserstoff oder Methyl ist, R² -COOH, -COOR³ oder -CONH₂ bedeutet, R³ ein aliphatischer Rest, insbesondere mit 1 bis 10 C-Atomen, vorzugsweise mit 1, 2 oder 3 C-Atomen und vorzugsweise Methyl ist. Bevorzugte Typen solcher Kautschuke enthalten ferner als Endgruppen solche, die ausgewählt sind aus der Gruppe bestehend aus -R-COOH, -R-OH, oder den Gruppen der nachstehenden Formeln IIa und IIb 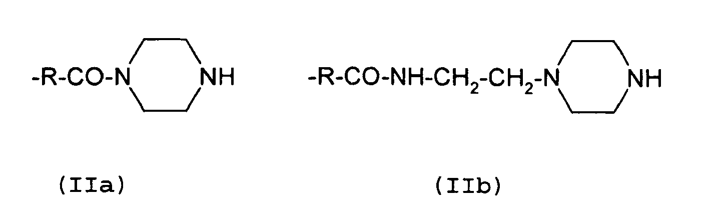 worin R ein Alkylenrest ist, der 1 bis 10 Methyleneinheiten umfassen kann, insbesondere 1, 2 oder 3.

Der Anteil der Einheiten (Ia), (Ib) und (Ic) beträgt vorzugsweise 5 bis 50 Gew.-%, der Anteil der Einheit (Id) beträgt 0 bis 30 Gew.-%, bei Resten mit freien Carboxylgruppen bevorzugt 0 bis 10 Gew.-%, wobei die Mengenangaben auf die Gesamtmenge der Reste Ia, Ib, Ic und gegebenenfalls Id bezogen sind.

Besonders bevorzugt ist das Copolymer ein Copolymer von Butadien und Acrylnitril oder Methacrylnitril, insbesondere ein Copolymer auf Basis von Butadien und Acrylnitril, das insbesondere flüssig ist. Derartige, flüssige Copolymere werden auch als flüssige NBR-Kautschuke bezeichnet. Diese Butadien-Acrylnitril-Copolymere haben in der Regel Molekulargewichte im Bereich von 500 bis 5000 insbesondere 2000 bis 5000, vorzugsweise 3000 bis 4500, und Acrylnitrilgehalte im Bereich von 0 bis 30 %, vorzugsweise 5 bis 27 %, z. B. etwa 10 % oder etwa 18 % oder etwa 26 %.

Erfindungsgemäß kann die Additivmischung ein, zwei, drei oder mehr verschiedene Homo- oder Copolymere enthalten.

Das vorstehend definierte Homo- oder Copolymer wird in der erfindungsgemäßen Additivmischung zusammen mit mindestens einem mehrwertigen Metallsalz verwendet. Es können also auch Mischungen von Metallsalzen verwendet werden. Die Menge der Metallsalzkomponente beträgt bis zu 10 Gew.-%, bezogen auf die gesamte Masse der Mischung. Insbesondere werden 1 bis 10 Gew.-%, vorzugsweise 3 bis 8 Gew.-%, wie 5 bis 7 Gew.-%. Sind in der Additivmischung neben den erfindungswesentlichen Bestandteilen weitere Bestandteile enthalten, so beziehen sich die vorstehenden Gewichtsprozentangaben auf die Summe des Gewichts der erfindungswesentlichen Bestandteile.

Insbesondere können Oxide, Hydroxide bzw. Oxidhydroxide, Halogenide, Nitrate oder Acetate als Metallsalz verwendet werden. Es können Salze von Metallen verschiedener Wertigkeit kombiniert werden. Besonders bevorzugt werden Metalloxide, Hydroxide oder gemischte Metalloxidhydroxide verwendet. Insbesondere werden Salze zweiwertiger und/oder dreiwertiger Metalle verwendet, vorzugsweise zweiwertiger Metalle.

Geeignete Metallverbindungen sind insbesondere ausgewählt aus der Gruppe bestehend aus den Oxiden, Hydroxiden und Oxidhydroxidverbindungen der zweiten bis vierten Haupt- oder Nebengruppen des Periodensystems der Elemente, z. B. Magnesium, Calcium, Scandium, Titan, Zirkonium, Aluminium, Gallium, Indium, Zinn, sowie der zweiten Nebengruppe, z. B. Zink. Besonders bevorzugt werden die Metalloxide, Hydroxide oder gemischten Metalloxidhydroxide von Zn, Mg, Ca oder A1 verwendet.

Erfindungsgemäß bevorzugte Verbindungen sind Magnesiumoxid, Magnesiumhydroxid, Calciumoxid, Calciumhydroxid, Calciumcarbonat, Zinkoxid, Zinkhydroxid und Aluminumhydroxid. Am meisten bevorzugt werden Zinkoxid, Calciumhydroxid, Calciumoxid, Calciumcarbonat und/oder Aluminumhydroxid verwendet.

Die erfindungsgemäße Additivmischung wird aus den vorstehend definierten Komponenten hergestellt, indem diese solange miteinander vermischt werden, bis eine homogene oder weitgehend homogene Mischung erhalten wird. Dies erfolgt bei Temperaturen im Bereich von bis zu 70°C, insbesondere bei einer Temperatur im Bereich von Raumtemperatur, d. h. etwa 15°C bis 20°C, bis etwa 40°C, 50°C oder 70°C.

Der Mischungsvorgang kann innerhalb von wenigen Minuten ausreichend vollständig sein. Je nach Größe des Ansatzes und der verwendeten Mischvorrichtung können Misch/Homogenisierungszeiten von bis zu etwa 2 Stunden notwendig sein. Dabei werden handelsübliche Vorrichtungen wie Dissolverrührwerke verwendet. Die Mischung hat in der Regel ein trübes aber homogenes Erscheinungsbild, d. h. im sichtbaren Bereich sind keine getrennten Phasen erkennbar.

Die Herstellung der Mischung kann unter inerter Atmosphäre, z. B. unter Stickstoff durchgeführt werden, je nach den technischen Anlagebedingungen.

Die erfindungsgemäßen Addtivmischungen sind im Allgemeinen hochviskose Flüssigkeiten mit einer dynamischen Viskosität bei 25°C von etwa 2 bis 10 000 Pa·s, z. B. etwa 4000 bis 5000 Pa·s.

Neben den vorstehend definierten Ausgangsmaterialien können bei der Herstellung weitere Hilfsreagenzien verwendet werden, z. B. Triphenylphosphin als Katalysator für nachfolgende Verfahrensschritte wie die Einarbeitung in die Epoxidharze.

Die erfindungsgemäßen Mischungen können ferner mit mindestens einem Epoxidharz umgesetzt werden. Unter Epoxidharz werden in diesem Zusammenhang Materialien verstanden, die auch nichtpolymerer Natur sind, z. B. Bisphenol-A-Diglycidylether, der in Form einer Flüssigkeit mit hoher Viskosität vorliegt, die in der Regel Oligomere dieser Substanz umfasst. Die Umsetzung mit derartigen Epoxidharzen wird in an sich bekannter Weise durch Erhitzen der Komponenten durchgeführt, gegebenenfalls in Anwesenheit von Katalysator. Dieser Schritt erfolgt in der Regel bei Temperaturen im Bereich von 80°C bis 170°C, insbesondere 100°C bis 160°C oder bei etwa 150°C.

Dabei wird im Allgemeinen ein schmelzbares und noch härtbares Addukt, auf diesem Gebiet der Technik auch als Präpolymer bezeichnet, erhalten. Als Katalysator können beispielsweise wie vorstehend erwähnt Triphenylphosphin, tertiäre Amine, quaternäre Ammonium- oder Phosphoniumsalze oder Chrom-Acetylacetonat verwendet werden.

Amine, beispielsweise Propan-1,3-diamin, Hexamethylendiamin, Diethylentriamin, Triethylentetramin, 2,2,4-Trimethylhexan-1,6-diamin; oder cycloaliphatische Amine, beispielsweise Bis-(4-35 aminoeyclohexylj-methan oder 3-Aminomethyl-3,5,5-trimethylcyclohexylamin (Isophorondiamin); oder aromatische Amine, beispielsweise Bis-(4-aminophenyl)-methan, Anilin-Formaldehyd-Harze, Bis-(4-aminophenyl)-sulfon, Bis-(4-aminophenyl)-methan oder 2,2-Bis-(4-aminophenyl)-propan; oder araliphatische Amine, wie Xylylendiamin; oder heterocyclische Amine.

Weitere Beispiele für Härter sind Polyaminoamide, wie beispielsweise solche aus aliphatischen Polyaminen und dimerisierten oder trimerisierten Fettsäuren; oder die Amide einschliesslich der substituierten Harnstoffe, insbesondere der Harnstoffe mit aromatischen Resten, wie N-(4-Chlorphenyl)-N,N'-dimethyl-harnstoff, N-(3-Chlor-4-methylphenyl)-N',N'-dimethylharnstoff (Chlortoluron), N-(2-hydroxyphenyl)-N,N'-dime-thylharnstoff oder 2,4-Bis-(N,N-dimethylureido)-toluol; oder Polyphenole, wie Resorcin, Hydrochinon, 2,2-Bis-(4-hydroxyphenyl)-propan (Bisphenol A) und Novolake auf Basis von Mono- oder Polyphenolen, wie Phenol oder Kresolen, und Aldehyden, wie Formaldehyd, Acetaldehyd oder Chloral; oder Polythiole, wie die im Handel unter der Bezeichnung "Thiokole^{®}" erhältlichen Polythiole; oder Polycarbonsäuren und insbesondere deren Anhydride, wie beispielsweise Phthalsäureanhydrid, Tetrahydrophthalsäureanhydrid, Hexahydrophthalsäureanhydrid, Hexachlorendomethylentetrahydrophthalsäureanhydrid, Pyromellitsäureanhydrid, Benzophenon-3,3',4,4'-tetracarbonsäuredianhydrid, die Säuren der vorgenannten Anhydride sowie auch Isophthalsäure und Terephthalsäure.

Ferner können auch katalytisch wirkende Härtungsmittel eingesetzt werden, wie beispielsweise tertiäre Amine, z. B. 2,4,6-Tris-(dimethylaminomethyl)-phenol; Mannichbasen, oder Imidazole, wie 2-Methylimidazol, 2-Phenylimidazol, 2-Ethyl-4-methylimidazol, 1-Benzyl-2-methylimidazol oder 1-Cyanoethyl-2-methylimidazol; Zinnsalze von Alkansäuren, wie beispielsweise Zinnoctoat; Friedel-Crafts-Katalysatoren, wie beispielsweise Bortrifluorid und Bortrichlorid und deren Komplexe und Chelate, die Beispiele für Verbindungen mit mindestens zwei Carboxylgruppen im Molekül sind aliphatische Polycarbonsäuren; oder cycloaliphatische Polycarbonsäuren oder aromatische Polycarbonsäuren. Beispiele für Tri- und höhere Carbonsäuren sind insbesondere aromatische Tri- oder Tetracarbonsäuren, wie Trimellithsäure, Trimesinsäure, Pyromellithsäure oder Benzophenontetracarbonsäure, sowie dimerisierte oder trimerisierte Fettsäuren, wie sie beispielsweise unter der Bezeichnung Pripol^{®} im Handel sind; oder Copolymere von (Meth)acrylsäure mit copolymerisierbaren Vinylmonomeren, wie beispielsweise die 1:1 Copolymeren von Methacrylsäure mit Styrol oder mit Methacrylsäuremethylester.
II) Polyglycidyl- und Poly-(β-methylglycidyl)-ether, die beispielsweise durch Umsetzung einer Verbindung enthaltend mindestens zwei alkoholische Hydroxylgruppen und/oder phenolische Hydroxylgruppen im Molekül mit Epichlorhydrin, Glycerindichlorhydrin oder mit β-Methylepichlorhydrin unter alkalischen Bedingungen oder in Anwesenheit eines sauren Katalysators und anschliessender Alkalibehandlung erhalten werden können.
   Beispiele für Verbindungen mit mindestens zwei alkoholischen Hydroxylgruppen und/oder phenolischen Hydroxylgruppen im Molekül sind aliphatische oder cycloaliphatische Alkohole wie Hydroxyl-terminierte Polyalkylenglykole, z. B. solche auf Basis von Ethylenoxid, Propylenoxid oder Butylenoxid, oder Alkohole, die aromatische Gruppen enthalen, wie N,N-Bis-(2-hydroxyethyl)-anilin oder p,p'-Bis-(2-hydroxyethylamino)-diphenylmethan; oder ein- oder mehrkernige Phenole, wie Resorcin, Hydrochinon, Bis-(4-hydroxyphenyl)-methan, 2,2-Bis-(4-hydroxyphe-nyl)-propan, bromiertes 2,2-Bis-(4-hydroxyphenyl)-propan, Bis-(4-hydroxyphenyl)-ether, Bis-(4-hydroxyphenyl)-sulfon, 1,1,2,2-Tetrakis-(4-hydroxyphenyl)-ethan oder Novolake, die durch Kondensation von Aldehyden, wie Formaldehyd, Acetaldehyd, Chloral oder Furfuraldehyd mit gegebenenfalls alkyl- oder halogen-substituierten Phenolen, wie Phenol, den oben beschriebenen Bisphenolen, 2- oder 4-Methylphenol, 4-tert.Butylphenol, p-Nonylphenol oder 4-Chlorphenol erhältlich sind.
III)Poly-(N-glycidyl)-verbindungen, die beispielsweise durch Dehydrochlorierung von Reaktionsprodukten 5 von Epichlorhydrin mit Aminen, die mindestens zwei Aminowasserstoffatome enthalten, hergestellt werden können.
   Beispiele für Amine, die solchen Epoxidharzen zu Grunde liegen, sind aliphatische oder cycloaliphatische Amine, wie amino-terminierte Polyalkylenglykole, z. B. solche auf Basis von Ethylenoxid, Propylenoxid oder Butylenoxid, oder aromatische Amine, wie Anilin, p-Toluidin, Bis-(4-aminophenyl)-methan, Bis-(4-aminophenyl)-sulfon, oder Bis-(4-aminophenyl)-ether; oder 70 araliphatische Amine, wie m-Xylylendiamin.
   Zu den Poly-(N-glycidyl)-verbindungen zählen aber auch Triglycidylisocyanurat, N,N'-Diglycidylderivate von Cycloalkylenharnstoffen, wie von Ethylenharnstoff oder von 1,3-Propylenharnstoff, und N,N'-Diglycidylderivate von Hydantoinen, wie von 5,5-Dimethylhydantoin.
IV) Poly-(S-glycidyl)-verbindungen, wie beispielsweise Di-S-glycidylderivate, die sich von Dithiolen, wie Ethan-1,2-dithiol oder von Bis-(4-mercaptomethylphenyl)-ether, ableiten.
V) Cycloaliphatische Epoxidharze oder Epoxidierungsprodukte von Dienen oder Polyenen, wie cycloaliphatische Epoxidharze, die beispielsweise durch Epoxidierung ethylenisch ungesättigter cycloaliphatischer Verbindungen hergestellt werden können. Beispiele dafür sind 1,2-Bis-(2,3-epoxycyclopentyloxy)-ethan, 2,3-Epoxycyclopentylglycidylether, Cyclohexan-1,2-dicarbonsäure Diglycidylester, 3,4-Epoxycyclohexylglycidylether, Bis-(2,3-epoxycyclopentyl)-ether, Bis-(3,4-epoxycyclohexyl)-ether, 5(6)-Glycidyl-2-eines Masterbatches. Dabei wurden die folgenden Rohstoffe verwendet:
   Hycar CTBN 1300 x 13 (Hersteller: Emerald Performance Materials) :
      Molmasse: ca. 3150 g/mol
      Säurezahl 32 mg KOH/g = 0,57 eq/g
   Zinkoxid Goldsiegel (Hersteller Grillo Zinkoxid GmbH):
      Molmasse: 81,39 g/mol
      Gehalt 99,8 %
   Triphenylphosphan, (Hersteller BASF):
      Gehalt > 99 %
   Epikote 828 (Hersteller Hexion):
      DGEBA = Bisphenol-A-Diglycidylether
      Dynamische Viskosität 11 000 mPas
      Epoxyequivalentgewicht 185 g/Eq

### Beispiel 1: Herstellung einer erfindungsgemäßen Additivmischung aus carboxylterminierten Copolymer (NBR-Flüssigkautschuk) und Magnesiumoxid

297,79 g (=169 meq COOH) carboxylterminierter NBR-Flüssigkautschuk (Hycar CTBN 1300 x 13) wurden zusammen mit 1,91 g Magnesiumoxid (48 mmol) in einem Planschliffkolben eingewogen und mit einem Dissolver bei 70°C homogenisiert.

### Beispiel 2: Herstellung eines Masterbatches

300 g der Mischung aus Beispiel 1 wurden zusammen mit 700 g Bisphenol-A-Diglycidylether in einem mit Rührer, Thermometer und Stickstoffeinleitung versehenen Planschliffkolben 3 h bei 150°C gerührt. Es entstand eine leicht trübe Masse mit einer Viskosiät von 160 000 mPas und einem Epoxyequivalentgewicht von 267 g / Eq. Der Gehalt an aktivem Bestandteil betrug bezogen auf die gesamte Masse 30 Gew.-%.

### Beispiel 3: Messung der Schlagzähigkeit

Die durch die erfindungsgemäße Dispersion erreichbare Verbesserung der Schlagzähigkeit von Epoxidharzen wurde gemäß der Methode EN ISO 179 im Vergleich zu einem Epoxidharz ohne schlagzähmachendes Additiv (Kontrolle) und einem Epoxidharz mit einem herkömmlichen schlagzähmachenden Additiv (Struktol Polydis 3614) gemessen. Als Epoxidharz wurde Bisphenol-A-Diglycidylether (DGEBA) wie vorstehend spezifiziert verwendet.

Bei den Formulierungen mit schlagzähmachendem Additiv, d. h. entweder herkömmlicher NBR-Kautschuk (Struktol Polydis 3614 mit einem Gehalt an herkömmlichen NBR-Kautschuk als aktivem Bestandteil von 40%) oder eine erfindungsgemäßen Mischung aus NBR-Kautschuk und Metallkomponente, die wie vorstehend beschrieben hergestellt (Beispiel 1) und in DGEBA eingearbeitet worden war (Beispiel 2), betrug der Gehalt an aktivem Bestandteil bezogen auf das Harz jeweils 10 Gew.-%. Siehe auch die Angaben in der nachstehenden Tabelle. Nach Einarbeitung der Elastomere wurde das Harz unter Verwendung von Dyhard 100 SF und Dyhard UR 300, kommerziell erhältlich von der Degussa AG, als Härter-Komponenten in einem Härtungszyklus von 2 h bei 180°C gehärtet. Danach wurde die Schlagzähigkeit gemessen. Die Werte sind in der nachstehenden Tabelle angegeben.

**Tabelle: Zusammensetzung der Harze und gemäß EN ISO 179 bestimmte Schlagzähigkeiten**

| **Bestandteile [Angaben in Gew.-Teilen]** | **Kontrolle (DGEBA)** | **Struktol Polydis 3614** | **Beispiel 1** |
|---|---|---|---|
| Epikote 828 | 100 | 75 | 67 |
| Struktol Polydis 3614 | -- | 25 | |
| Masterbatch aus Bsp. 2 | -- | | 33 |
| Dyhard 100 SF | 6 | 6 | 6 |
| Dyhard UR 300 | 2 | 2 | 2 |
| | | | |
| **Schlagzähigkeit** [kJ/m²] | 29 | 46 | 74 |

Man erkennt, dass die unter Verwendung des erfindungsgemäßen Additivs erzielbare Verbesserung der Schlagzähigkeit deutlich größer ist als die, die unter Verwendung eines herkömmlichen Additivs erzielt wird.

## Patentansprüche

1. Verfahren zur Herstellung eines schlagzähen Epoxidharz-Masterbatches, bei dem zunächst eine Additivmischung hergestellt wird, wobei die Additivmischung mindestens ein Homo- oder Copolymer mit Einheiten, die abgeleitet sind von mindestens einem 1,3-Dien und gegebenenfalls mindestens einem polaren, ethylenisch ungesättigten Comonomeren, wobei die Enden des Homo- oder Copolymers eine funktionelle Gruppe ausgewählt aus der Gruppe bestehend aus Carboxyl-, Amid-, Hydroxy-, Epoxy- und Aminogruppen tragen, und mindestens ein mehrwertiges Metallsalz enthält, wobei die Menge der Metallsalzkomponente bis zu 10 Gew.-% beträgt, bezogen auf das Gesamtgewicht des mindestens einen Homo- oder Copolymeren und des mindestens einen mehrwertigen Metallsalzes der Mischung, bei welchem Verfahren das mindestens eine Homooder Copolymer und die Metallsalzkomponente in einem geeigneten Verhältnis bei einer Temperatur im Bereich von bis zu etwa 70°C miteinander vermischt werden, bis eine homogene Mischung erhalten wird, und die Mischung dann bei einer Temperatur im Bereich von 80°C bis 170°C in das Epoxidharz eingearbeitet wird, wobei die Additivmischung zunächst in einer Menge von 5 bis zu 60 Gew.-% in ein erstes Epoxidharz eingearbeitet wird, um den Masterbatch zu bilden.

2. Verfahren nach Anspruch 1, **dadurch gekennzeichnet, dass** die Additivmischung in einer Menge von 20 bis 40 Gew.-% in das Epoxidharz eingearbeitet wird, um den Masterbatch zu bilden.

3. Verfahren nach Anspruch 1 oder Anspruch 2, **dadurch gekennzeichnet, dass** das Metall ausgewählt ist aus der Gruppe bestehend aus zweiwertigen und dreiwertigen Metallen.

4. Verfahren nach Anspruch 3, **dadurch gekennzeichnet, dass** das Metall ausgewählt ist aus der Gruppe bestehend aus Magnesium, Calcium, Zink und Aluminium.

5. Verfahren nach einem der vorhergehenden Ansprüche, **dadurch gekennzeichnet, dass** das Metallsalz ausgewählt ist aus der Gruppe bestehend aus Halogeniden, Nitraten, Acetaten, Oxiden, Hydroxid und Oxidhydroxiden.

6. Verfahren nach einem der vorhergehenden Ansprüche, **dadurch gekennzeichnet, dass** das Homo- oder Copolymer ein flüssiges, bei Temperaturen unterhalb von 80°C fließfähiges Copolymer ist.

7. Verfahren nach einem der vorhergehenden Ansprüche, **dadurch gekennzeichnet, dass** das 1,3-Dien ausgewählt ist aus der Gruppe bestehend aus Butadien, Isopren und Chloropren.

8. Verfahren nach einem der vorhergehenden Ansprüche, **dadurch gekennzeichnet, dass** das polare, ethylenisch ungesättigte Comonomer ausgewählt ist aus der Gruppe bestehend aus Acrylsäure, Methacrylsäure, niederen Alkylestern dieser Säuren, Amiden dieser Säuren, Fumarsäure, Itaconsäure, Maleinsäure, den niederen Alkyl- oder Halbestern dieser Säuren, den Anhydriden dieser Säuren, Vinylestern, Acrylnitril und Methacrylnitril.

9. Verfahren nach einem der vorhergehenden Ansprüche, **dadurch gekennzeichnet, dass** die Additivmischung aus dem mindestens einen Homo- oder Copolymer und der Metallsalzkomponente besteht.

## Claims

1. A process for manufacturing an impact-resistant epoxy resin masterbatch, in which process an additive mixture is initially manufactured, wherein the additive mixture comprises at least one homopolymer or copolymer containing units that are derived from at least one 1,3-diene and optionally a polar, ethylenically unsaturated comonomer, wherein the ends of the homopolymer or copolymer carry a functional group selected from the group consisting of carboxyl, amide, hydroxyl, epoxy and amine groups, and at least one multivalent metal salt, wherein the amount of the metal salt component is up to 10 wt %, relative to the total weight of the at least one homopolymer or copolymer and of the at least one multivalent metal salt of the mixture, in which process the at least one homopolymer or copolymer and the metal salt component are blended together in a suitable ratio at a temperature in the range of up to 70 °C until a homogeneous mixture is obtained, and the mixture is then incorporated into the epoxy resin at a temperature in the range of 80 °C to 170 °C, wherein the additive mixture is initially incorporated in an amount of 5 to 60 wt % into a first epoxy resin, in order to form the masterbatch.

2. The process according to claim 1, **characterised in that** the additive mixture is incorporated in an amount of 20 to 40 wt % into the epoxy resin in order to form the masterbatch.

3. The process according to claim 1 or claim 2, **characterised in that** the metal is selected from the group consisting of divalent and trivalent metals.

4. The process according to claim 3, **characterised in that** the metal is selected from the group consisting of magnesium, calcium, zinc and aluminium.

5. The process according to one of the previous claims, **characterised in that** the metal salt is selected from the group consisting of halides, nitrates, acetates, oxides, hydroxide and oxide-hydroxides.

6. The process according to one of the previous claims, **characterised in that** the homopolymer or copolymer is a liquid, free-flowing copolymer at temperatures below 80 °C.

7. The process according to one of the previous claims, **characterised in that** the 1,3-diene is selected from the group consisting of butadiene, isoprene and chloroprene.

8. The process according to one of the previous claims, **characterised in that** the polar, ethylenically unsaturated comonomer is selected from the group consisting of acrylic acid, methacrylic acid, lower alkyl esters of these acids, amides of these acids, fumaric acid, itaconic acid, maleic acid, the lower alkyl or half esters of these acids, the anhydrides of these acids, vinyl esters, acrylonitrile and methacrylonitrile.

9. The process according to one of the previous claims, **characterised in that** the additive mixture consists of the at least one homopolymer or copolymer and the metal salt component.

## Revendications

1. Procédé pour la fabrication d'un mélange maître de résine époxyde résistant aux chocs, dans lequel on fabrique dans un premier temps un mélange d'additifs, dans lequel le mélange d'additifs contient au moins un homopolymère ou copolymère avec des unités qui sont dérivées d'au moins un diène 1,3 et, éventuellement, d'au moins un comonomère polaire à insaturation éthylénique, où les extrémités de l'homopolymère ou du copolymère portent un groupement fonctionnel choisi dans le groupe constitué des groupements carboxyle, amide, hydroxyle, époxy et amino, et au moins un sel métallique polyvalent, où la quantité du composant de sel métallique s'élève à jusqu'à 10 % en poids par rapport au poids total du au moins un homopolymère ou copolymère et du au moins un sel métallique polyvalent du mélange, dans lequel procédé le au moins un homopolymère ou copolymère et le composant de sel métallique sont mélangés l'un à l'autre dans un rapport approprié à une température dans une plage allant jusqu'à environ 70 °C, jusqu'à obtenir un mélange homogène, et le mélange est ensuite incorporé à la résine époxyde à une température dans une plage de 80 °C à 170 °C, le mélange d'additifs étant incorporé d'abord dans une quantité de 5 à 60 % en poids à une première résine époxyde pour former le mélange maître.

2. Procédé selon la revendication 1, **caractérisé en ce que** le mélange d'additifs est incorporé dans une quantité de 20 à 40 % en poids à la résine époxyde pour former le mélange maître.

3. Procédé selon la revendication 1 ou la revendication 2, **caractérisé en ce que** le métal est choisi dans le groupe constitué de métaux divalents et trivalents.

4. Procédé selon la revendication 3, **caractérisé en ce que** le métal est choisi dans le groupe constitué du magnésium, du calcium, du zinc et de l'aluminium.

5. Procédé selon l'une quelconque des revendications précédentes, **caractérisé en ce que** le sel métallique est choisi dans le groupe constitué des halogénures, des nitrates, des acétates, des oxydes, de l'hydroxyde et des oxyhydroxydes.

6. Procédé selon l'une quelconque des revendications précédentes, **caractérisé en ce que** l'homopolymère ou le copolymère est un copolymère liquide, fluidifiable à des températures inférieures à 80 °C.

7. Procédé selon l'une quelconque des revendications précédentes, **caractérisé en ce que** le diène 1,3 est choisi dans le groupe constitué du butadiène, de l'isoprène et du chloroprène.

8. Procédé selon l'une quelconque des revendications précédentes, **caractérisé en ce que** le comonomère polaire à insaturation éthylénique est choisi dans le groupe constitué de l'acide acrylique, de l'acide méthacrylique, d'esters d'alkyle inférieurs de ces acides, d'amides de ces acides, de l'acide fumarique, de l'acide itaconique, de l'acide maléique, des esters d'alkyles inférieurs ou des semi-esters de ces acides, des anhydrides de ces acides, d'esters de vinyle, de l'acrylonitrile et du méthacrylonitrile.

9. Procédé selon l'une quelconque des revendications précédentes, **caractérisé en ce que** le mélange d'additifs est constitué du au moins un homopolymère ou copolymère et du composant de sel métallique.
